# NEUE EUROPÄISCHE PATENTSCHRIFT

(11) **EP 0 256 214 B2**
(45) Veröffentlichungstag und Bekanntmachung des Hinweises auf die Entscheidung über den Einspruch: **31.01.1996**
(45) Hinweis auf die Patenterteilung: 12.06.1991
(21) Anmeldenummer: 87106435.8
(22) Anmeldetag: 04.05.1987
(51) Int. Cl.: B01D 5/00

(54) **Verfahren zum Abtrennen von wasserunlöslichen Destillaten aus Wasserdampfbrüden**
Process for separation of water-insoluble distillates from water vapour
Procédé pour séparer des distillats insolubles dans l'eau de la vapeur d'eau

(30) Priorität: 13.08.1986 DE 3627477
(43) Veröffentlichungstag der Anmeldung: 24.02.1988
(73) Patentinhaber: KRUPP MASCHINENTECHNIK GESELLSCHAFT MIT BESCHRÄNKTER HAFTUNG, D-45143 Essen (DE)
(72) Erfinder: Weber, Klaus, D-2000 Hamburg 76 (DE)

(56) Entgegenhaltungen:
- US-A- 2 794 515
- US-A- 4 188 195
- US-A- 4 188 290
- US-A- 4 613 410
- Wiegand Karlsruhe GmbH, "Vakuum durch Kondensation", TKI 7, 1975, S. 1-6
- CAV 1978, W. Hummel, "Dampfstrahl-Vakuumpumpen mit geschlossenem Kreislauf des Kondensats, korrosionsbeständig und umweltfreundlich", S. 2-5
- Meyers Lexikon, Technik und exakte Naturwissenschaften, Band 1, Bibliographisches Institut, München/Wien/Zürich, 1969, S. 432
- Ullmans Enzyklopädie, 10. Band, 1958, S. 269-270
- Römpps Chemie-Lexikon, 1972, S. 24
- R. Billet, "Verdampfung und ihre technischen Anwendungen", Verlag Chemie, Weinheim, Deerfield Beach (Florida), Basel, 1981, S. 6
- P. Grassmann, "Einführung in die thermische Verfahrenstechnik", W. De Gruyter & Co., Berlin, 1967, S. 60
- E. Klapp, "Apparate- und Anlagetechnik", Springer-Verlag Berlin, Heidelberg, New York, 1980, S. 24-28

## Beschreibung

Die Erfindung betrifft ein Verfahren zum Abtrennen von wasserunlöslichen Destillaten, z.B. Fetten und Fettbegleitern, aus Wasserdampfbrüden gemäß dem Oberbegriff des Patenanspruches 1.

Bei der Wasserdampf-Schleppdestillation unter Vakuum, wie z.B. bei der Fettsäurefraktionierung oder der Desodorierung von Fetten und Ölen, fallen Wasserdampfbrüden an, die mit wasserdampfunlöslichem Destillat beladen sind, d.h. mit Fetten und Fettbegleitstoffen. Ein Großteil des Destillates wird in einer Brüdenwascheinrichtung entfernt. Jedoch ist der aus der Brüdenwascheinrichtung austretende Wasserdampf noch mit Destillatresten behaftet. Außerdem führt er nicht kondensierbare Gase mit.

Wie die Anmelderin aus der Praxis weiß, ist es bekannt, diese Wasserdampfbrüden mittels eines Dampfstrahlverdichters auf den der Kühlwassertemperatur entsprechenden Kondensationsdruck zu bringen und durch Mischkondensation niederzuschlagen. Dabei fällt ein Gemisch aus Brüdenkondensat, kondensiertem Treibdampf und Kühlwasser an. Es ist auch bekannt, dieses Kühlwasser über Kühleinrichtungen zu rezirkulieren und aus dem Kreislauf einen mit Destillat angereicherten Nebenstrom abzutrennen. In jedem Fall fällt ein mit Destillat verunreinigter Abwasserstrom an.

Es ist ferner bekannt, die Brüden mittels eines im Kreislauf geführten Kälteträgers, z.B. einer Calciumchlorid-Lösung, direkt niederzuschlagen. Da durch die kondensierende Brüdenmenge eine ständige Verdünnung des Elektrolyts stattfindet, muß fortwährend frische Elektrolytlösung zugeführt werden. Ein salzhaltiger und mit Destillatresten behafteter Nebenstrom fällt als Abwasser an.

Es ist weiterhin bekannt, die Brüden in regenerativ intermittierend arbeitenden Oberflächenkondensatoren niederzuschlagen, die mittels Ammoniak, Frigon o.ä. auf dem Vakuum entsprechender Kondensationstemperatur gehalten werden. Da die Kondensation unterhalb des Tripelpunktes des Wassers stattfindet, schlägt sich das Brüdenkondensat als Eis auf der Oberfläche nieder; was zu der intermittierenden Arbeitsweise führt durch den ständig sich wiederholenden Zyklus Kondensation-Vereisung, Aufwärmen-Abschmelzen, Abkühlen auf Kondensationstemperatur. Bei diesem Verfahren fällt als Abwasserstrom nur das Brüdenkondensat mit Destillat behaftet an. Die intermittierende regenerative Fahrweise benötigt aber einen zusätzlichen Energieaufwand, hervorgerufen durch das periodische Aufwärmen-Abschmelzen und Abkühlen der Eisenmasse der Kondensatoren. Weiterhin tritt bei diesem Verfahren die allgemein bekannte Problematik der Kopplung kontinuierlich ablaufender Prozesse wie die der Destillation mit intermittierend regenerativ arbeitenden Anlagenteilen auf.

Der Erfindung liegt die Aufgabe zu Grunde, ein Verfahren der im Oberbegriff des Patentanspruchs 1 angegebenen Gattung so zu verbessern, daß mit geringstem Energieaufwand die Abgabe von verunreinigtem Abwasser vermieden wird.

Diese Aufgabe wird erfindungsgemäß durch die kennzeichnenden Merkmale des Anspruchs 1 gelöst.

Die Erfindung bietet den besonderen Vorteil, daß der vom Nebenstrom mitgeführte Elektrolyt mit erhöhter Konzentration in den Kühlmittelkreislauf zurückgeführt wird, so daß Elektrolytverluste praktisch ausgeschaltet werden und die durch die Mischkondensation verursachte Verdünnung wieder rückgängig gemacht wird.

Aus US-A-2794515 ist zwar bereits ein Verfahren zum Abtrennen von wasserunlöslichen Destillaten aus nicht mit vorgereinigten Wasserdampfbrüden vergleichbarem Koksofengas bekannt, bei dem jedoch zudem keine Mischkondensation an einer Kühlflüssigkeit mit daraus entstehender Druckabsenkung stattfindet und aus dem Trägergas kein Prozeßdampf erzeugt, vielmehr nicht ausreichend gereinigter Dampf nach außen ausgestoßen wird.

Das Merkmal des Anspruchs 2 ermöglicht auch die Nutzung der Wärme, die in der nichtverdampften Kühlflüssigkeit des Nebenstromes enthalten ist. Die optimale Nutzung des anfallenden Dampfes hängt von den Gegebenheiten des Einzelfalles ab, insbesondere von der Kostenrelation zwischen Dampf und elektrischer Energie. Wenn es unter den gegebenen Bedingungen vorteilhaft ist, die bei der Mischkondensation üblicherweise anfallenden nicht kondensierbaren Gase mit Hilfe von Treibdampf abzusaugen und zu verdichten, wird der Dampf gemäß Anspruch 3 als Treibdampf verwendet.

In diesem Falle kann durch das Merkmal des Anspruchs 4 erreicht werden, daß auch die Absaugung und Verdichtung der Inertgase abwasserfrei erfolgt.

Wenn es aber aus irgendwelchen Gründen zweckmäßig ist, die nicht kondensierbaren Gase z. B. durch Wälzkolbenpumpen oder durch Flüssigringpumpen abzuziehen, wird der Dampf gemäß Anspruch 5 für eine vorgeschaltete Verfahrensstufe genutzt.

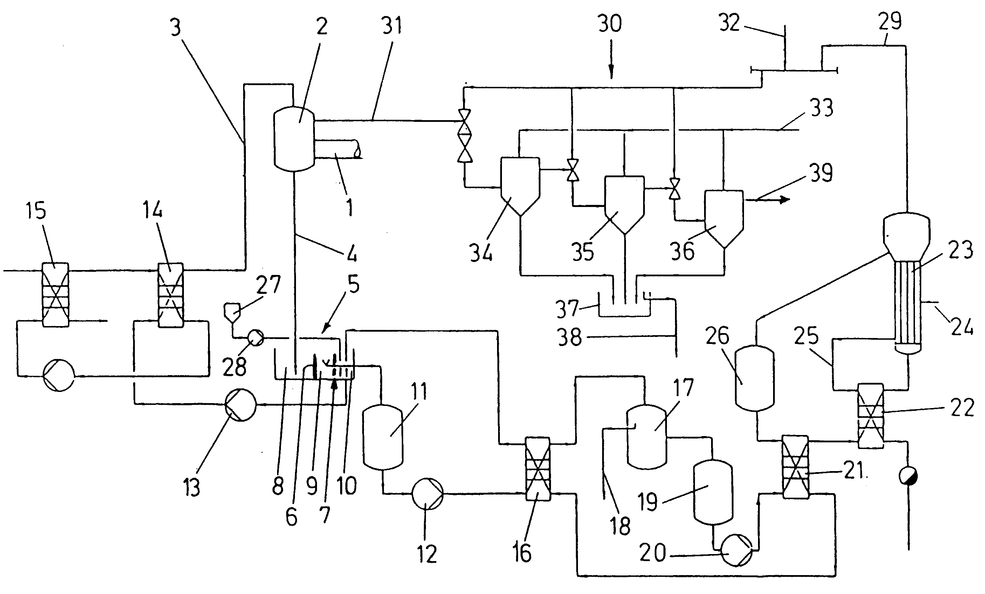

Die Zeichnung dient zur Erläuterung der Erfindung anhand einer schematisch dargestellten Anlage zur Durchführung des erfindungsgemäßen Verfahrens.

Von einer nicht dargestellten vorgeschalteten Verfahrensstufe, z. B. vom Brüdenwäscher eines Desodoriseurs, werden bereits weitgehend von Destillat befreite Brüden über eine Leitung 1 einem Mischkondensator 2 zugeleitet. Dort werden die kondensierbaren Bestandteile, nämlich Wasser mit den noch mitgeführten geringen Mengen an Fetten und Fettbegleitstoffen, durch Kontaktierung mit einer durch eine Leitung 3 zugeführten Kühlflüssigkeit, nämlich einer wässrigen Elektrolytlösung, bei niedriger Temperatur, vorzugsweise etwa - 10 bis - 20 °C, und einem entsprechenden Druck von weniger als 5 mbar, vorzugsweise weniger als 2,5 mbar, kondensiert.

Die mit den Brüden vermischte, verdünnte Kühlflüssigkeit gelangt über ein Fallrohr 4, welches den barometrischen Abschluß gewährleistet, in einen Fallwasserkasten 5. Dieser ist durch eine bis zum Boden reichende Zwischenwand 6 und eine weitere Zwischenwand 7 in drei Kammern 8, 9, 10 unterteilt. Die Kammern 9 und 10 stehen am Boden miteinander in Verbindung, da zwischen der Unterkante der Zwischenwand 7 und dem Boden des Fallwasserkastens 5 ein Spalt besteht. Die der Kammer 8 zugeführte Flüssigkeit gelangt über die Oberkante der Zwischenwand 6 zu den Kammern 9, 10. In der Kammer 9 bildet sich an der Oberfläche eine aufschwimmende Schicht, die mit ausgeflocktem Destillat angereichert ist. Diese Schicht wird als Nebenstrom über eine Vorlage 11 und eine Pumpe 12 kontinuierlich abgezogen. Der destillatarme Hauptstrom wird vom Boden der Kammer 10 über eine Pumpe 13 und einen Kühler 14 im Kreislauf zum Mischkondensator 2 zurückgeführt. In dem Kühler 14 wird die Flüssigkeit, die durch die Mischkondensation aufgewärmt ist, durch verdampfendes Ammoniak, das im Kreislauf umgewälzt wird, wieder auf die für die Mischkondensation erforderliche Temperatur zurückgekühlt. Das Ammoniak wird in dem Kondensator 15 wieder verflüssigt.
Der abgezweigte Nebenstrom wird über einen Plattenwärmeaustauscher (16) aus eine Temperatur von etwa 60 °C aufgewärmt, so daß das Destillat flüssig wird. Er gelangt zu einem Leichtflüssigkeits-Abscheider 17. Dort wird das Destillat über eine Leitung 18 abgezogen; es kann einer beliebigen Verwendung zugeführt werden, z.B. durch Rückführung in eine vorgeschaltete Verfahrensstufe. Der weitgehend vom Destillat befreite Nebenstrom wird über eine Vorlage 19 und eine Pumpe 20 abgezogen, in zwei weiteren Wärmeaustauschern 21, 22 weiter aufgewärmt und schließlich einem Steigfilmverdampfer 23 mit Brüdenkopf und Tropfenabscheider zugeführt. Zur Beheizung des Verdampfers 23 wird über eine Leitung 24 Dampf zugeführt, dessen heißes Kondensat über eine Leitung 25 abfließt und anschließend zur Vorwärmung des Nebenstromes in dem Wärmeaustauscher 22 genutzt wird. In dem Verdampfer 23 wird nur eine Teilmenge der zugeführten Kühlflüssigkeit bei etwa 4 bar verdampft. Der nicht verdampfte Rest gelangt über eine Vorlage 26 zu dem Wärmeaustauscher 21 und von dort zu dem Wärmeaustauscher 16. Nachdem er die im Verdampfer 23 aufgenommene Wärme größtenteils an den zum Verdampfer fließenden Nebenstrom abgegeben hat, wird der in die Kammer 10 des Fallwasserkastens 5 zurückgeleitet. Auf diese Weise gelangt auch der vom Nebenstrom mitgeführte Elektrolyt mit erhöhter Konzentration wieder in den Kühlmittelkreislauf zurück. Zur Kompensation etwaiger Leckverluste kann aus einem Vorratsbehälter 27 mit einer Dosierpumpe 28 hochkonzentrierter Elektrolyt ebenfalls der Kammer 10 zugeführt werden, um die gewünschte Elektrolytkonzentration im Kreislauf aufrecht zu erhalten.

Der in dem Verdampfer 23 hergestellte Dampf wird über ein Leitungssystem 29 dem Dampfstrahlaggregat 30 als Treibdampf zugeführt mit dem nichtkondensierbare Gase über eine Leitung 31 aus dem Mischkondensator 2 abgesaugt und komprimiert werden. Über eine Leitung 32 kann gegebenenfalls, z.B. beim Anfahren der Anlage, Zusatzdampf eingeleitet werden. Kühlwasser wird über eine Leitung 33 den Mischkondensatoren 34, 35, 36 des Dampfstrahlaggregates 30 zugeführt. Das anfallende Abwasser wird in dem Fallwasserkasten 37, der als barometrischer Abschluß für die Mischkondensatoren des Dampfstrahlaggregats 30 dient, gesammelt und über eine Leitung 38 entweder in die Kanalisation geleitet oder nach Kühlung in einem nicht dargestellten Kühlturm wieder zu der Leitung 33 zurückgeführt. Das nicht kondensierbare Gas wird über einen Stutzen 39 in die Atmosphäre ausgestoßen.

## Patentansprüche

1. Verfahren zum Abtrennen von wasserunlöslichen Destillaten, insbesondere von Fetten und Fettbegleitstoffen, aus Wasserdampfbrüden,
wobei die kondensierbaren Bestandteile der Brüden durch Mischkondensation an einer als Kühlflüssigkeit verwendeten Elektrolytlösung niedergeschlagen werden,
wobei die mit kondensierten Brüden vermischte Kühlflüssigkeit in einen destillatarmen Hauptstrom und einen mit dem Destillat angereicherten Nebenstrom aufgeteilt wird
und wobei der Hauptstrom abgekühlt und rezirkuliert wird,
dadurch gekennzeichnet,
daß der Nebenstrom nach Abscheiden des Destillates teilweise verdampft wird,
daß der Dampf als Prozeßdampf verwendet wird
und daß der nicht verdampfte Rest des Nebenstroms abgekühlt und wieder in den Kühlflüssigkeitskreislauf eingespeist wird.

2. Verfahren nach Anspruch 1, dadurch gekennzeichnet, daß die Abkühlung des nicht verdampften Restes durch Wärmetausch mit dem Nebenstrom erfolgt.

3. Verfahren nach Anspruch 1 oder 2, dadurch gekennzeichnet, daß der aus dem Nebenstrom erzeugte Dampf als Treibdampf zum Absaugen und Verdichten der in den Brüden enthaltenen nicht kondensierbaren Gase verwendet wird.

4. Verfahren nach Anspruch 3, dadurch gekennzeichnet, daß das beim Absaugen und Verdichten der nicht kondensierbaren Gase anfallende Abwasser gekühlt und als Kondensationsmittel wieder beim Absaugen und Verdichten der nicht kondensierbaren Gase verwendet wird.

5. Verfahren nach einem der Ansprüche 1, oder 2, dadurch gekennzeichnet, daß der aus dem Nebenstrom erzeugte Dampf in einer vorgeschalteten Verfahrensstufe genutzt wird.

## Claims

1. A method for separating water-insoluble distillates, in particular fats and fat-accompanying substances, from steam vapours,
the condensable components of the vapours being precipitated by mixed condensation by an electrolyte solution used as cooling fluid;
the cooling fluid mixed with condensed vapours being divided into a low-distillate main stream and a side stream enriched with the distillate;
and the main stream being cooled and recirculated;
characterised in that
the side stream is partly vaporised after the distillate has been separated;
the vapour is used as a process vapour;
and the non-vaporised remainder of the side stream is cooled and fed again into the cooling fluid circuit.

2. A method according to Claim 1, characterised in that the cooling of the non-vaporised remainder is done by heat exchange with the side stream.

3. A method according to any one of Claims 1 or 2, characterised in that the vapour generated from the side stream is used as a propelling vapour for drawing off and compressing the non-condensable gases contained in the vapours.

4. A method according to Claim 3, characterised in that the waste water occurring during the drawing-off and compression of the non-condensable gases is cooled and is used when drawing off and compressing the non-condensable gases again.

5. A method according to any one of Claims 1 or 2, characterised in that the vapour generated from the side stream is used in a previous process stage.

## Revendications

1. Procédé de séparation de distillats insolubles dans l'eau, en particulier de graisses et de substances qui accompagnent les graisses, à partir de buées de vapeur d'eau,
dans lequel les composants condensables des buées sont précipités par cocondensation sur une solution d'électrolyte utilisée comme liquide de refroidissement,
le liquide de refroidissement mélangé aux buées condensées étant partagé en un courant principal pauvre en distillat et en un courant secondaire enrichi en le distillat,
le courant principal étant refroidi et remis en circulation,
caractérisé en ce que
le courant secondaire est partiellement évaporé après séparation du distillat,
en ce que la vapeur est utilisée comme vapeur de processus,
et en ce que le résidu non évaporé du courant secondaire est refroidi et à nouveau alimenté dans le circuit de liquide de refroidissement.

2. Procédé suivant la revendication 1, caractérisé en ce que le refroidissement du résidu non évapore a lieu par échange thermique avec le courant secondaire.

3. Procédé suivant l'une des revendications 1 ou 2, caractérisé en ce que la vapeur produite à partir du courant secondaire est utilisée comme vapeur d'entraînement pour l'aspiration et la compression des gaz non condensables contenus dans les buées.

4. Procédé suivant la revendication 3, caractérisé en ce que l'eau résiduaire formée lors de l'aspiration et de la compression des gaz non condensables est refroidie et est utilisée à nouveau, comme produit de condensation, lors de l'aspiration et de la compression des gaz non condensables.

5. Procédé suivant l'une des revendications 1 ou 2, caractérisé en ce que la vapeur produite à partir du courant secondaire est exploitée dans une étape de procédé située en amont.
